(19) Europäisches Patentamt
European Patent Office
Office européen des brevets

(11) Veröffentlichungsnummer: **0 442 068 B1**

(12) **EUROPÄISCHE PATENTSCHRIFT**

(45) Veröffentlichungstag der Patentschrift: **08.06.94**

(51) Int. Cl.5: **C08F 8/12**, C08F 8/42, C08C 19/34

(21) Anmeldenummer: **90123545.7**

(22) Anmeldetag: **07.12.90**

# (54) Benzophenoderivate und Polymere mit phenolischen Hydroxylgruppen.

(30) Priorität: **02.02.90 DE 4003079**

(43) Veröffentlichungstag der Anmeldung:
**21.08.91 Patentblatt 91/34**

(45) Bekanntmachung des Hinweises auf die Patenterteilung:
**08.06.94 Patentblatt 94/23**

(84) Benannte Vertragsstaaten:
**DE FR GB IT**

(56) Entgegenhaltungen:
**EP-A- 0 348 744**

(73) Patentinhaber: **BAYER AG**

**D-51368 Leverkusen(DE)**

(72) Erfinder: **Leitz, Edgar, Dr.**
**Goethestrasse 63**
**W-4047 Dormagen 1(DE)**
Erfinder: **Buysch, Hans-Josef, Dr.**
**Brandenburger Strasse 28**
**W-4150 Krefeld(DE)**
Erfinder: **Ott, Karl-Heinz, Dr.**
**Paul-Klee-Strasse 54**
**W-5090 Leverkusen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Gegenstand der Erfindung sind Polymerisate der Formeln (II), (d.h. IIa und IIb)

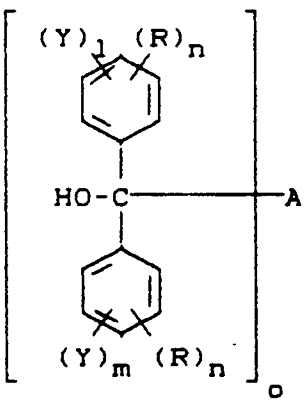

(IIa)

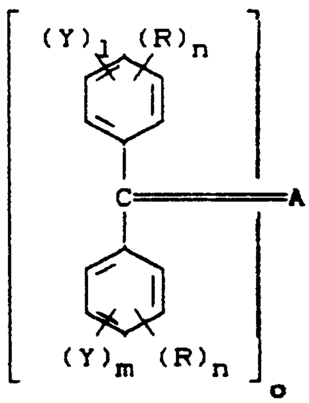

(IIb)

worin
A = Rest eines Polymerisats anionisch polymerisierbarer Vinylverbindungen
Y = OH
o = 1, 2,
R = $C_1$-$C_4$-Alkyl, $C_1$-$C_4$-Alkoxy,
l, m = 0, 1, 2 aber l + m ≧ 1
n = 0, 1, 2;
und ein Verfahren zu ihrer Herstellung.

Die Polymeren der Formeln (II) können hergestellt werden, indem man anionische "lebende" Polymere mit Benzophenon-Derivaten der Formel (I)

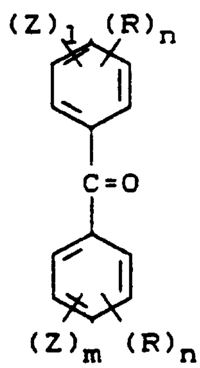

worin
Z = -OSi($C_1$-$C_4$-Alkyl)$_3$
und die übrigen Reste wie in Formel (II) umsetzt und die Reaktionsprodukte in neutralem oder saurem Milieu solvolysiert.

Bevorzugte Benzophenonderivate der Formel (I) sind solche, in denen l + m = 1, 2 oder 3. Sie können in an sich bekannter Weise durch Umsetzung solcher Verbindungen der Formel (I), in denen Z für -OH steht mit Trialkylchlorsilanen in Gegenwart eines Säurefängers hergestellt werden, oder durch Umsetzung mit anderen bekannten Silylierungsmitteln wie Hexamethylendisilanharzen oder Hexamethylsilylformamid. Geeignete Ausgangsstoffe sind beispielsweise
2-Hydroxy-benzophenon
4-Hydroxy-benzophenon

2-Hydroxy-4'methyl-benzophenon
4-Hydroxy-4'-methyl-benzophenon
6-Hydroxy-3-methyl-benzophenon
4-Hydroxy-2-methoxy-benzophenon
2-Hydroxy-4-methoxy-benzophenon
4-Hydroxy-3-methoxy-benzophenon
3-Hydroxy-4'-methoxy-benzophenon
4-Hydroxy-4'-methoxy-benzophenon
3-Hydroxy-2,4-dimethoxy-benzophenon
2-Hydroxy-3,4-dimethoxy-benzophenon
2-Hydroxy-4,5-dimethoxy-benzophenon
2-Hydroxy-4,6-dimethoxy-benzophenon
2-Hydroxy-4,4'-dimethoxy-benzophenon
2-Hydroxy-3,4'-dimethoxy-benzophenon
3-Hydroxy-2',4'-dimethoxy-benzophenon
4-Hydroxy-3,5-dimethoxy-benzophenon
4-Hydroxy-3,4'-dimethoxy-benzophenon
2,4-Dihydroxy-benzophenon
2,6-Dihydroxy-benzophenon
2,5-Dihydroxy-benzophenon
3,4-Dihydroxy-benzophenon
2,4-Dihydroxy-3'-methoxy-benzophenon
2,4-Dihydroxy-4'-methoxy-benzophenon
2,5-Dihydroxy-4-methoxy-benzophenon
2,6-Dihydroxy-4-methoxy-benzophenon
4,4'-Dihydroxy-benzophenon
3,3'-Dihydroxy-benzophenon
3,4'-Dihydroxy-benzophenon
2,3'-Dihydroxy-benzophenon
2,2'-Dihydroxy-benzophenon
3,4'-Dihydroxy-benzophenon
2,2'-Dihydroxy-4-methoxy-benzophenon
2,4,4'-Trihydroxybenzophenon
2,4,2',4'-Tetrahydroxybenzophenon
Besonders geeignet sind
4-Hydroxy-benzophenon
4,4'-Dihydroxy-benzophenon
2,4-Dihydroxy-benzophenon
Diese Benzophenone sind bekannt (vgl. Beilstein 8 (4) 1262-1263, 2442-2453, 3160-3167).

Die "lebenden"Polymeren sind an sich bekannt. Es handelt sich um anionisch polymerisierte mono- und bifunktionelle Polymerisate, die noch polymerisationsaktiv sind. "Lebende" Polymerisate können hergestellt werden durch Polymerisation anionisch polymerisierbarer Vinylverbindungen in inerten organischen Lösungsmitteln mit Hilfe von Alkalimetallalkylen oder -arylen. Geeignete anionisch polymerisierbare Monomere sind z.B. Styrol, para-Methylstyrol, Vinylpyridin, Vinylnaphthalin, Isopropenylnaphthalin, 1,3-Butadien, Isopren, Alkylmethacrylate, insbesondere Methylmethacrylat. Bevorzugt sind Styrol, Butadien, Isopren und deren Mischungen.

Inerte Lösungsmittel für die Polymerisation sind beispielsweise aromatische und aliphatische Kohlenwasserstoffe wie Toluol, Benzol, Xylol, Pentan, Hexan, Cyclohexan oder Ether wie Tetrahydrofuran, Tetrahydropyran, Dioxan. Man kann auch Mischungen von Lösungsmitteln verwenden.

Zur Herstellung von monofunktionellen "lebenden" Polymerisaten, die zu Polymerisaten der Formel II mit o = 1 führen, verwendet man als Initiator Alkalimetallalkyle wie n-Butyl-; s-Butyl-; 1,1-Diphenylhexyl-; CumylLithium oder -Kalium, bevorzugt sind n-Butyl- und s-Butyllithium.

Zur Herstellung von bifunktionelle "lebenden" Polymerisaten, die zu Polymerisaten der Formel II mit o = 2 führen, verwendet man als Initiator Alkalimetallaryle, insbesondere Naphthalin-Natrium, Naphthalin-Kalium, Oligo-$\alpha$-methylstyrol-Natrium oder -Kalium, 1,3-Phenylen- bis (3-methyl-1-phenyl-pentyliden)bis-(Lithium). Die Polymerisation läuft im allgemeinen bei -100 bis +100°, vorzugsweise bei -80 bis +80°C. Die günstigste Reaktionstemperatur hängt auch vom Lösungsmittel ab.

Die Polymerisation wird nach den bekannten Regeln der anionischen Polymerisation durchgeführt. Insbesondere müssen Bedingungen eingehalten werden unter denen Carbanionen beständig sind (Ausschluß von Sauerstoff und Feuchtigkeit).

Zur Herstellung der erfindungsgemäßen Polymeren werden die lebenden Polymeranionen mit Verbindungen der Formel (I) bei -50 bis +100°C, bevorzugt bei 0 bis 50°C umgesetzt. Bevorzugt verwendet man einen geringen molaren Überschuß, beispielsweise von 0,01 bis 0,3 Mol. Auch diese Umsetzung arbeitet mit "lebenden" Carbanionen und muß deshalb ebenfalls unter Bedingungen durchgeführt werden, unter denen Carbanionen beständig sind.

Aus dem Umsetzungsprodukt der "lebenden" Polymerisate mit den Verbindungen der Formel (I) entstehen die erfindungsgemäßen Polymerisate durch Abspaltung der Silylethergruppen und gegebenenfalls durch Wasserabspaltung.

Die Solvolyse der Silylether ist durch Reaktion der Umsetzungsprodukte mit Wasser, Alkoholen oder schwachen Säuren möglich. Geeignete Solvolytika sind niedere aliphatische Alkohole wie Methanol, Ethanol, Isopropanol und die verschiedenen Butanole. Geeignete schwache Säuren sind Kohlensäure, Ameisensäure, Essigsäure, Propionsäure, Bernsteinsäure, Adipinsäure. Diese Solvolytika werden im allgemeinen im Überschuß verwendet. Bei dieser Art der Solvolyse erhält man Polymere der Formel (IIa). Um Produkte der Formel (IIb) herzustellen, verwendet man als Solvolytika starke Säuren und arbeitet bei erhöhter Temperatur, beispielsweise 40 bis 150°C. Geeignete starke Säuren sind z.B. Chlorwasserstoff, Bromwasserstoff, Schwefelsäure, Sulfonsäure, Phosphorsäure, phosphorige Säure, Phosphonsäure, Trichloressigsäure und Oxalsäure` Besonders geeignet sind Toluolsulfonsäure, Phosphorsäure, phosphorige Säure und Oxalsäure. Diese Säuren werden als wäßrige Lösungen oder zusammen mit Alkohol ebenfalls im Überschuß angewendet.

Aus den so erhaltenen Reaktionsprodukten können die Polymeren der Formeln (II) durch Ausfällen mit Alkoholen oder durch Ausdampfen gewonnen werden. Die Polymerisate der Formeln (II) haben im allgemeinen Molekulargewichte von 500 bis 500 000 g/Mol, bevorzugt 1000 bis 250 000 g/Mol und besonders bevorzugt 1500 bis 150 000 g/Mol. Sie eignen sich als Vorstufen für die Herstellung von Blockcopolymerisaten und Blockkondensaten aufgrund der umsetzungsfähigen aromatischen Hydroxylgruppen.

## Beispiele

### Beispiel 1

4-Trimethylsilyloxy-benzophenon

Ein Gemisch von 99 g (0,5 Mol) 4-Hydroxybenzophenon, 50 g (0,5 Mol) trockenem Triethylamin und 800 ml trockenem Xylol wurde unter Stickstoff und Rühren bei ca. 50°C während einer Stunde tropfenweise mit 55 g (0,5 Mol) frisch destilliertem Trimethylchlorsilan versetzt und noch 2 Stunden bei 50°C gerührt. Nach Filtration und Waschen des Filterkuchens mit trockenem Xylol wurden die vereinigten Filtrate eingedampft und der hochsiedende Rückstand im Hochvakuum destilliert. Man erhielt 133 g (ca. 100 %. der Theorie) 4-Trimethylsilyloxy-benzophenon einer fast farblosen Flüssigkeit von Kp 110 bis 115°C/0,9 bis 1,1 mbar und einem Brechungsindex von $n_D^{20}$ = 1,5636 und einer gaschromatographisch bestimmten Reinheit von 99,2 %.

### Beispiel 2

2,4-Bis(trimethylsilyloxy)benzophenon

Ein Gemisch von 107 g (0,5 Mol) 2,4-Dihydroxybenzophenon, 100 g (1 Mol) trockenem Triethylamin und 1100 ml trockenem Xylol wurde unter Stickstoff und Rühren bei ca. 50°C während einer Stunde tropfenweise mit 109 g (1 Mol) frisch destilliertem Trimethylchlorsilan versetzt und noch 3 Stunden bei 50°C gerührt. Nach Filtration und Waschen des Filterkuchens mit trockenem Xylol wurden die vereinigten Filtrate eingedampft und der hochsiedende Rückstand im Hochvakuum destilliert. Man erhielt 177 g (ca. 99 % der Theorie) 2,4-Bis(trimethylsilyloxy)benzophenon eines hellen Öls mit einem kP von 185 bis 190°C/1,2 bis 1,4 mbar und einem Brechungsindex von $n_D^{20}$ = 1,5582 und einer gaschromatographisch bestimmten Reinheit von 98,7 %.

Beispiel 3

4,4'-Bis(trimethylsilyloxy)benzophenon

Zu einem Gemisch von 214 g (1 Mol) 4,4-Dihydroxybenzophenon, 210 g (2,1 Mol) trockenem Triethylamin und 1500 ml trockenem Xylol wurden unter Stickstoff und Rühren bei ca. 50 °C während 1,5 Stunden 229 g (2,1 Mol) frisch destilliertes Trimethylchlorsilan getropft und noch 5 Stunden bei 50 bis 120 °C gerührt. Nach Filtration der heißen Mischung und Waschen des Filterkuchens mit heißem trockenem Xylol wurden die vereinigten Filtrate eingedampft und der Rückstand im Hochvakuum destilliert. Man erhielt 323 g (ca. 90 % der Theorie) 4,4'-Bis(trimethylsilyloxy)benzophenoneines hellen Öls mit einem Kp von 186 bis 190 °C/1,1 bis 1,3 mbar, einem Brechungsindex von $n_D^{20}$ = 1,5429 und einer gaschromatographisch bestimmten Reinheit von 98,2 %.

Beispiel 4

Umsetzung von Polystyryllithium mit 4-Trimethylsilyloxy-benzophenon(Molmasse $M_w$ 2600 g/Mol)

Zu einem Gemisch aus 150 ml Toluol und 12 ml s-Butyllithium (1,3 molare Lösung in Cyclohexan/Isopentan (92:8)) wurden unter $N_2$-Atmosphäre 25 ml (0,218 Mol) Styrol innerhalb von 15 Minuten bei 20 °C und unter Rühren gegeben. Nach einer Polymerisationszeit von 60 Minuten wurde der Polymer-Lösung eine Probe entnommen. Das Polymere wurde durch Fällung in Methanol, Filtration und Trocknung isoliert (Ausbeute: 3,6 g) (Probe 1). Anschließend wurden zur orange-roten Polystyryllithium-Lösung 6 g (0,022 Mol) 4-Trimethylsilyloxy-benzophenon gegeben. Die Lösung wurde dunkelgrün. Nach einer Reaktionszeit von 120 Minuten wurde de Lösung in 1000 ml Methanol gegossen. Das ausgefallene Polymere wurde durch Filtration und anschließende Trocknung gewonnen. Die Ausbeute betrug 16,3 g. Zur Wasserabspaltung und Silyletherspaltung wurde das Polymere in 150 ml Tetrahydrofuran gelöst, 10 ml 1 molare methanolische Phosphorsäure zugesetzt und 3 Stunden unter Rückfluß erhitzt. Das Polymere wurde dann durch Fällung in Methanol, Filtration und Trocknung isoliert.

GPC-Analyse (Polystyrol-Eichung):
Probe 1: $\overline{M}_n$ = 1600 g/Mol, $\overline{M}_w$ = 1700 g/Mol
Endprodukt: $\overline{M}_n$ = 2100 g/Mol, $\overline{M}_w$ = 2600 g/Mol, Absorption bei der Wellenzahl 3585 $cm^{-1}$
($\overline{M}_n$ = Zahlenmittel der Molekulargewichte, $\overline{M}_w$ = Gewichtsmittel der Molekulargewichte).

Beispiel 5

Umsetzung von Polystyryllithium mit 4-Trimethylsilyloxy-benzophenon(Molmasse $M_w$ = 3000 g/Mol)

Zu einem Gemisch aus 150 ml Toluol und 6 ml s-Butyllithium (1,3-molare Lösung in Cyclohexan/Isopentan (92:8)) wurden unter $N_2$-Atmosphäre 25 ml (0,218 Mol) Styrol innerhalb von 15 Minuten bei 20 °C und unter Rühren gegeben. Nach einer Polymerisationszeit von 60 Minuten wurde der Polymer-Lösung eine Probe entnommen. Das Polymere wurde durch Fällung in Methanol, Filtration und Trocknung isoliert (Ausbeute: 4,5 g) (Probe 1). Anschließend wurden zur orange-roten Polystyryllithium-Lösung 3 g (0,011 Mol) 4-Trimethylsilyloxy-benzophenon gegeben. Die Lösung wurde dunkelgrün. Nach einer Reaktionszeit von 120 Minuten wurde die Lösung in 1000 ml Methanol gegossen. Das ausgefallene Polymere wurde durch Filtration und anschließende Trocknung gewonnen. Die Ausbeute betrug 19,4 g. Zur Wasserabspaltung und Silyletherspaltung wurde das Polymere in 150 ml Tetrahydrofuran gelöst, 10 ml 1-molare methanolische Phospshorsäure zugesetzt und 3 Stunden unter Rückfluß erhitzt. Das Polymere wurde dann durch Fällung in Methanol, Filtration und Trocknung isoliert.

GPC-Analyse des Endprodukts (Polystyrol-Eichung):
$M_n$ = 2600 g/Mol, $M_w$ = 3000 g/Mol
Absorption bei der Wellenzahl 3585 $cm^{-1}$

Beispiel 6

Umsetzung von Polystyryllithium mit 4-Trimethylsilyloxy-benzophenon(Molmasse $M_w$ = 180 000 g/Mol)

Zu einem Gemisch aus 300 ml Toluol und 50 ml (0,436 Mol) Styrol wurden unter $N_2$-Atmosphäre 0,7 ml s-Butyllithium (1,3-molare Lösung in Cyclohexan/Isopentan (92:8)) bei 20 °C und unter Rühren gegeben.

Nach einer Polymerisationszeit von 4 h bei 40 °C wurde die orange-rote Polystyryllithium-Lösung mit 0,5 g ($1,85 \times 10^{-3}$ Mol) 4-Trimethylsilyloxy-benzophenon versetzt. Die Lösung wurde grün. Nach einer Reak tionszeit von 2 h wurde die Lösung in 1000 ml Methanol gegossen. Das ausgefallene Polymere wurde durch Filtration und anschließende Trocknung gewonnen. Die Ausbeute betrug 30,7 g. Zur Wasserabspaltung und Silyletherspaltung wurde das Polymere in 150 ml Tetrahydrofuran gelöst, 10 ml 1 molare methanolische Phosphorsäure zugesetzt und 3 Stunden unter Rückfluß erhitzt. Das Polymere wurde dann durch Fällung in Methanol, Filtration und Trocknung isoliert.

GPC-Analyse (Polystyrol-Eichung):

$M_n$ = 55 000 g/Mol, $M_w$ = 180 000 g/Mol

Beispiel 7

Umsetzung von bifunktionellem Polystyrylnatrium mit 4-Trimethylsilyloxybenzophenon (Molmasse $M_w$ 49 000 g/Mol)

Zu einer Lösung von 0,01 Mol Naphthalin-Natrium in 210 ml Tetrahydrofuran wurden bei -78 °C 50 g (0,48 Mol) Styrol getropft. Nach einer Polymerisationszeit von 1 Stunde bei dieser Temperatur wurde eine Probe entnommen.

Das Polymere wurde durch Fällung in Methanol, Filtration und Trocknung isoliert (Ausbeute: 2,9 g) (Probe 1). Anschließend wurden zur orange-roten Polystyrylnatrium-lösung 4 g (0,0148 Mol) 4-Trimethylsilyloxybenzophenon gegeben. Nach weiteren 2 h bei -78 °C wurde die Lösung in 1000 ml Methanol gegossen. Das ausgefallene Polymere wurde durch Filtration und Trocknung gewonnen (Ausbeute: 40,7 g) (Probe 2). Zur Wasserabspaltung und Silyletherspaltung wurden 25 g des Polymeren in 150 ml Tetrahydrofuran gelöst, 20 ml 1-molare methanolische Salzsäure zugesetzt und 2 Stunden unter Rückfluß erhitzt. Das Polymere wurde dann durch Fällung in Methanol, Filtration und Trocknung isoliert.

GPC-Analyse (Polystyrol-Eichung:

Endprodukt: $M_n$ = 28 000 g/Mol; $M_w$ = 49 000 g/Mol

Beispiel 8

Umsetzung von Polystyryllithium mit 4,4'-Bis(trimethylsilyloxy)benzophenon (Molmasse $M_w$ = 4700 g/Mol)

Zu einem Gemisch aus 400 ml Toluol und 8,5 ml n-Butyllithium (3,6 molare Lösung in Hexan) wurden unter $N_2$-Atmosphäre 50 ml (0,436 Mol) Styrol innerhalb von 15 Minuten bei 20 °C und unter Rühren gegeben. Nach einer Polymerisationszeit von 60 Minuten wurden 37 g Polymer-Lösung entnommen und das Produkt durch Fällung in Methanol, Filtration und Trocknung isoliert (Ausbeute: 4,6 g) (Probe 1). Anschließend wurden zur orange-roten Polystyryllithium-Lösung 15 g (0,042 Mol) 4,4'-Bis-(trimethylsilyloxy)-benzophenon in 20 ml Toluol gegeben. Die Lösung wurde dunkelgrün. Nach einer Reaktionszeit von 120 Minuten wurde die Lösung in 1000 ml Methanol gegossen. Das ausgefallene Polymere wurde durch Filtration und anschließende Trocknung gewonnen. Die Ausbeute betrug 37,3 g (Probe 2). Zur Wasserabspaltung und Silyletherspaltung wurden 27 g der Probe 2 in 150 ml Tetrahydrofuran gelöst, 20 ml 1-molare methanolische Salzsäure zugesetzt und 3 Stunden unter Rückfluß erhitzt. Das Polymere wurde dann durch Fällung in Methanol, Filtration und Trocknung isoliert.

GPC-Analyse des Endprodukts (Polystyrol-Eichung):

$M_n$ = 3600 g/Mol, $M_w$ = 4700 g/Mol

IR-Spektroskopie: Absorptionsbanden der Hydroxylfunktionen bei 3610 $cm^{-1}$, 1260 $cm^{-1}$, 1170 $cm^{-1}$

Beispiel 9

Umsetzung von Polystyryllithium mit 4,4'-Bis(trimethylsilyloxy)benzophenon (Molmasse $M_w$ 6000 g/Mol)

Zu einem Gemisch von 400 ml Toluol und 4 ml n-Butyllithium (3,6 molare Lösung in Hexan) wurden unter $N_2$-Atmosphäre 50 ml (0,436 Mol) Styrol innerhalb von 15 Minuten bei 20 °C und unter Rühren gegeben. Nach einer Polymerisationszeit von 60 Minuten wurden 38 g Polymer-Lösung entnommen und das Produkt durch Fällung in Methanol, Filtration und Trocknung isoliert (Ausbeute: 4,9 g) (Probe 1). Anschließend wurden zur orange-roten Polystyryllithium-Lösung 9 g (0,025 Mol) 4,4'-Bis(trimethylsilyloxy)-benzophenon in 12 ml Toluol gegeben. Die Lösung wurde dunkelgrün. Nach einer Reaktionszeit von 120 Minuten wurde die Lösung in 1000 ml Methanol gegossen. Das ausgefallene Polymere wurde durch

Filtration und anschließende Trocknung gewonnen. Die Ausbeute betrug 42,3 g (Probe 2). Zur Wasserabspaltung und Silyletherspaltung wurden 32 g der Probe 2 in 150 ml Tetrahydrofuran gelöst, 20 ml 1-molare methanolische Salzsäure zugesetzt und 3 Stunden unter Rückfluß erhitzt. Das Polymere wurde dann durch Fällung in Methanol, Filtration und Trocknung isoliert.

GPC-Analyse des Endprodukts (Polystyrol-Eichung):

$M_n$ = 4600 g/Mol, $M_w$ = 6000 g/Mol

IR-Spektroskopie: Absorptionsbanden der Hydroxylfunktionen bei 3610 $cm^{-1}$, 1260 $cm^{-1}$, 1170 $cm^{-1}$

Beispiel 10

Umsetzung von Polystyryllithium mit 4,4'-Bis(trimethylsilyloxy)benzophenon (Molmasse $M_w$ 26 500 g/Mol)

Zu einem Gemisch aus 400 ml Toluol und 50 ml (0,436 Mol) Styrol wurden unter $N_2$-Atmosphäre 1,75 ml s-Butyllithium (1,3 molare Lösung in Cyclohexan/Isopentan (92:8)) bei 20 °C und unter Rühren gegeben. Nach einer Polymerisationszelt von 3 h bei 40 °C wurde die orange-rote Polystyryllithium-Lösung mit 1,6 g (4,5 x $10^{-3}$ Mol) 4,4'-Bis(trimethylsilyloxy)benzophenonin 2 ml Toluol versetzt. Die Lösung wurde grün. Nach einer Reaktionszeit von 2 h wurde die Lösung in 1000 ml Methanol gegossen.

Das ausgefallene Polymere wurde durch Filtration und anschließende Trocknung gewonnen. Die Ausbeute betrug 45 g. Zur Wasserabspaltung und Silyletherspaltung wurde das Polymere in 150 ml Tetrahydrofuran gelöst, 10 ml 1-molare methanolische Phosphorsäure zugesetzt und 3 h unter Rückfluß erhitzt. Das Polymere wurde dann durch Fällung in Methanol, Filtration und Trocknung isoliert.

GPC-Analyse des Endprodukts (Polystyrol-Eichung):

$M_n$ = 23 500 g/Mol, $M_w$ = 26 500 g/Mol

Beispiel 11

Umsetzung von Polystyryllithium mit 4,4'-Bis(trimethylsilyloxy)benzophenon (Molmasse $M_w$ 95 000 g/Mol)

Zu einem Gemisch aus 400 ml Toluol und 50 ml (0,436 Mol) Styrol wurden unter $N_2$-Atmosphäre 0,7 ml s-Butyllithium (1,3-molare Lösung in Cyclohexan/Isopentan (92:8)) bei 20 °C und unter Rühren gegeben. Nach einer Polymerisationszeit von 4 Stunden bei 40 °C wurde die orange-rote Polystyryllithium-Lösung mit 1 g (2,8 x $10^{-3}$ Mol) 4,4'-Bis(trimethylsilyloxy)benzophenon in 1,3 ml Toluol versetzt. Nach einer Reaktionszeit von 2 Stunden wurde die Lösung in 1000 ml Methanol gegossen. Das ausgefallene Polymere wurde durch Filtration und anschließende Trocknung gewonnen. Die Ausbeute betrug 43,3 g. Zur Wasserabspaltung und Silyletherspaltung wurde das Polymere in 150 ml Tetrahydrofuran gelöst, 10 ml 1-molare methanolische Phosphorsäure zugesetzt und 3 Stunden unter Rückfluß erhitzt. Das Polymere wurde dann durch Fällung in Methanol, Filtration und Trocknung isoliert.

GPC-Analyse des Endprodukts (Polystyrol-Eichung):

$M_n$ = 75 000 g/Mol, $M_w$ = 95 000 g/Mol

Beispiel 12

Umsetzung von Polystyryllithium mit 4,4'-Bis(trimethylsilyloxy)benzophenon (Molmasse $M_w$ 285 000 g/Mol)

Zu einem Gemisch aus 400 ml Toluol und 50 ml (0,436 Mol) Styrol wurden unter $N_2$-Atmosphäre 0,35 ml s-Butyllithium (1,3-molare Lösung in Cyclohexan/Isopentan (92:8)) bei 20 °C und unter Rühren gegeben. Nach einer Polymerisationszeit von 6 Stunden bei 40 °C wurde die orange-rote Polystyryllithium-Lösung mit 1 g (2,8 x $10^{-3}$ Mol) 4,4'-Bis(trimethylsilyloxy)benzophenon in 1,3 ml Toluol versetzt. Die Lösung wurde grün. Nach einer Reaktionszeit von 2 h wurde die Lösung in 1000 ml Methanol gegossen. Das ausgefallene Polymere wurde durch Filtration und anschließende Trocknung gewonnen. Die Ausbeute betrug 29,1 g. Zur Wasserabspaltung und Silyletherspaltung wurde das Polymere in 150 ml Tetrahydrofuran gelöst, 10 ml 1-molare methanolische Phosphorsäure zugesetzt und 3 Stunden unter Rückfluß erhitzt. Das Polymere wurde dann durch Fällung in Methanol, Filtration und Trocknung isoliert.

GPC-Analyse des Endprodukts (Polystyrol-Eichung);

$M_n$ = 140 000 g/Mol, $M_w$ = 285 000 g/Mol

Beispiel 13

Umsetzung von Polyisopropenyllithium mit 4,4'-Bis(trimethylsilyloxy)benzophenon (Molmasse $M_w$ 2300 g/Mol)

Zu einem Gemisch aus 150 ml Toluol und 6,7 ml n-Butyllithium (2,5 molare Lösung in Hexan) wurden unter $N_2$-Atmosphäre 25 g (0,733 Mol) Isopren innerhalb von 15 Minuten bei 20 °C und unter Rühren gegeben. Nach einer Polymerisationszeit von 2 Stunden wurde das Reaktionsgemisch mit 7,5 g (0,021 Mol) 4,4'-Bis(trimethylsilyloxy)benzophenon in 5 ml Toluol versetzt, wobei sich die Lösung gelb-grün färbte. Nach einer Reaktionszeit von 2 Stunden wurde die Lösung in 1000 ml Methanol gegossen. Das Polymere setzte sich gelartig ab. Das überstehende Lösungs-/Fällungsmittelgemisch wurde abdekantiert. Zur Wasserabspaltung und Silyletherspaltung wurde das Polymergel in 50 ml Tetrahydrofuran gelöst, 5 ml 1-molare methanolische Salzsäure zugesetzt und 3 Stunden unter Rückfluß erhitzt. Das Polymere wurde dann durch Eingießen der Lösung in Methanol, Abdekantieren des Lösungs-/Fällungsmittels, Waschen mit Methanol und Trocknung gewonnen (Ausbeute 24 g).

GPC-Analyse des Endprodukts (Polystyrol-Eichung):
$M_n$ = 1800 g/Mol, $M_w$ = 2300 g/Mol
Absorption bei der Wellenzahl 3585 $cm^{-1}$

Beispiel 14

Umsetzung eines "lebenden"Styrol/Isopren-Blockcopolymeren mit 4,4'-Bis(trimethylsilyloxy)benzophenon

Zu einem Gemisch aus 3 l Toluol und 125 g (1,20 Mol) Styrol wurden unter $N_2$-Atmosphäre 5 ml s-Butyllithium (1,3-molare Lösung in Cyclohexan/Isopentan (92:8)) bei 20 °C und unter Rühren gegeben. Nach einer Polymerisationszeit von 1 Stunde bei 40 °C wurde die orange-rote Polystyryllithium-Lösung mit 375 g (5,50 Mol) Isopren versetzt, wobei sich die Lösung hellgelb färbte. Nach weiteren 3 Stunden bei 40 °C wurden 3 g (8,4 x $10^{-3}$ Mol) 4,4'-Bis(trimethylsilyloxy)benzophenon in 2 ml Toluol zugegeben. Die Lösung zeigte nun Grünfärbung. Nach 2 Stunden bei 20 °C wurden 20 ml 1-molare methanolische Salzsäure und 2 l Toluol zugesetzt. Die Lösung wurde 3 h unter Rückfluß gekocht. Anschließend wurde die Lösung eingeengt und das Polymere durch Fällung in ca. 10 l Methanol, Filtration und Trocknung gewonnen (Ausbeute 456 g).

GPC-Analyse des Endprodukts (Polystyrol-Eichung):
$M_n$ = 95 000 g/Mol, $M_w$ = 130 000 g/Mol

Beispiel 15

Umsetzung von bifunktionellem Polystyrylnatrium mit 4,4'-Bis(trimethylsilyloxy)benzophenon (Molmasse $M_w$ 9400 g/Mol)

Zu einer Lösung von 0,033 Mol Naphthalin-Natrium in 130 ml Tetrahydrofuran wurden bei -78 °C 25 g (0,24 Mol) Styrol getropft. Nach einer Polymerisationszeit von 2 Stunden bei dieser Temperatur wurden 20 g (0,056 Mol) 4,4'-Bis(trimethylsilyloxy)benzophenon zur orange-roten Polystyrylnatrium-Lösung gegeben. Nach weiteren 2 Stunden bei -78 °C wurde die Lösung in 1000 ml Methanol gegossen. Das ausgefallene Polymere wurde durch Filtration und Trocknung gewonnen (Ausbeute: 22,7 g). Zur Wasserabspaltung und Silyletherspaltung wurde das Polymere in 150 ml Tetrahydrofuran gelöst, 20 ml 1-molare methanolische Salzsäure zugesetzt und 2 Stunden unter Rückfluß erhitzt. Das Polymere wurde dann durch Fällung in Methanol, Filtration und Trocknung isoliert.

GPC-Analyse des Endprodukts (Polystyrol-Eichung):
$M_n$ = 4900 g/Mol, $M_w$ = 9400 g/Mol

Beispiel 16

Umsetzung von Polystyryllithium mit 2,4-Bis(trimethylsilyloxy)benzophenon (Molmasse $M_w$ 2500 g/Mol)

Zu einem Gemisch aus 200 ml Toluol und 12 ml s-Butyllithium (1,3-molare Lösung in Cyclohexan/Isopentan (92:8)) wurden unter $N_2$-Atmosphäre 25 ml (0,218 Mol) Styrol bei 20 °C und unter Rühren gegeben. Nach einer Polymerisationszeit von 5 Stunden bei 20 °C wurde die orange-rote Polystyryllithium-Lösung mit 6 g (0,017 Mol) 2,4-Bis(trimethylsilyloxy)benzophenon gelöst in Toluol versetzt, wobei sich die Lösung rötlich-braun färbte. Nach einer Reaktionszeit von 2 Stunden wurde die Lösung in 1000 ml Methanol gegossen. Das ausgefallene Polymere wurde durch Filtration und anschließende Trocknung gewonnen. Die Ausbeute betrug 21,7 g. Zur Wasserabspaltung und Silyletherspaltung wurde das Polymere in 100 ml Tetrahydrofuran gelöst, 10 ml 1-molare methanolische Salzsäure zugesetzt und 2 Stunden unter Rückfluß erhitzt. Das Polymere wurde dann durch Fällung in Methanol, Filtration und Trocknung isoliert.

GPC-Analyse des Endprodukts (Polystyrol-Eichung):

$M_n$ = 2000 g/Mol, $M_w$ = 2500 g/Mol

Absorption bei der Wellenzahl 3585 $cm^{-1}$

## Patentansprüche

**1.** Polymerisate der Formeln (II), (d.h. IIa und IIb)

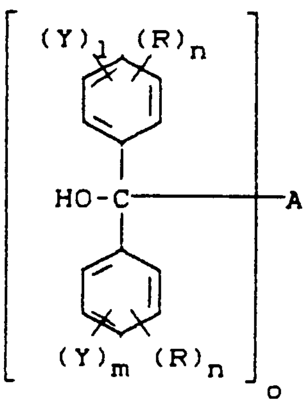

(IIa)

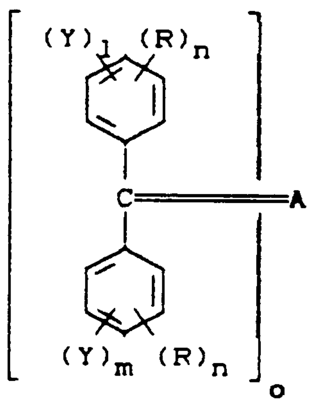

(IIb)

worin

A = Anion eines Polymerisats anionisch polymerisierbarer Vinylverbindungen

Y = OH

o = 1, 2;

R = $C_1$-$C_4$-Alkyl, $C_1$-$C_4$-Alkoxy,

l, m = 0, 1, 2 aber l + m ≧ 1,

n = 0, 1, 2.

**2.** Verfahren zur Herstellung der Polymerisate gemäß Anspruch 1, dadurch gekennzeichnet, daß man anionische lebende Polymere mit Verbindungen der Formel (I)

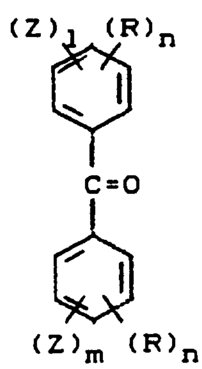

(I)

worin

Z = -OSi($C_1$-$C_4$-Alkyl)$_3$

und die übrigen Reste definiert sind wie in Formel (II) umsetzt und die Reaktionsprodukte in neutralem oder saurem Milieu solvolysiert.

**Claims**

**1.** Polymers corresponding to formulae (II) (i.e. IIa and IIb)

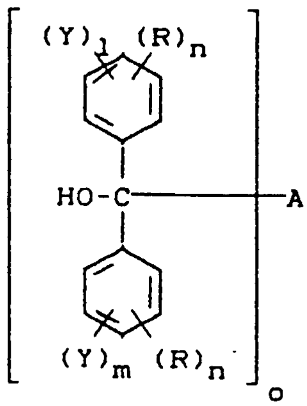

(IIa)

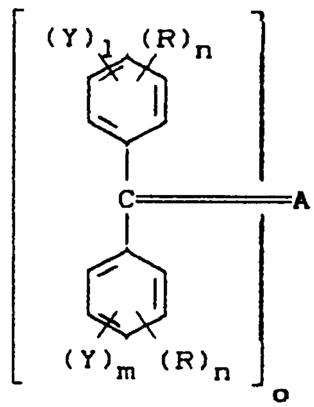

(IIb)

in which
A = residue of a polymer of anionically polymerizable vinyl compounds,
Y = OH,
o = 1,2,
R = $C_{1-4}$ alkyl, $C_{1-4}$ alkoxy,
l, m = 0, 1, 2, with the proviso that $l + m \geq 1$,
n = 0, 1, 2.

**2.** A process for the production of the polymers claimed in claim 1, characterized in that anionic living polymers are reacted with compounds corresponding to formula (I)

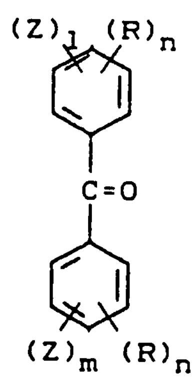

in which
Z = $-OSi(C_{1-4}\text{-alkyl})_3$
and the remaining symbols are as defined for formula (II), and the reaction products are solvolyzed in a neutral or acidic medium.

## Revendications

**1.** Polymères de formules (II), (à savoir IIa et IIb)

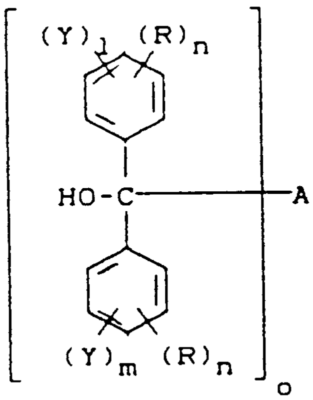

(IIa)

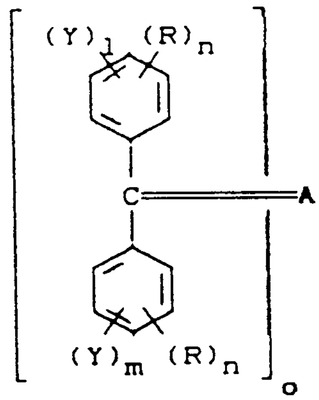

(IIb)

dans lesquels

A représente un anion d'un produit de polymérisation de composés vinyliques polymérisables par voie anionique

Y représente un groupe OH

o a la valeur 1 ou 2

R est un groupe alkyle en $C_1$ à $C_4$, alkoxy en $C_1$ à $C_4$,

l et m ont la valeur 0, 1 ou 2, mais la somme l + m est supérieure ou égale à 1,

n a la valeur 0, 1 ou 2.

**2.** Procédé de production des polymères suivant la revendication 1, caractérisé en ce qu'on fait réagir des polymères anioniques vivants avec des composés de formule (I)

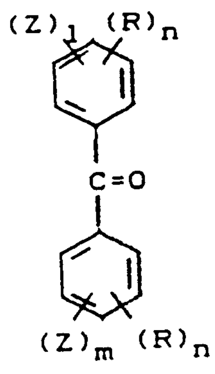

(I)

dans laquelle

Z est un groupe -OSi(alkyle en $C_1$ à $C_4$)$_3$ et les autres restes sont définis comme dans la formule (II), et on solvolyse les produits de réaction en milieu neutre ou acide.